Europäisches Patentamt

European Patent Office

Office européen des brevets

(11) Numéro de publication: **0 354 144**
A1

## (12) DEMANDE DE BREVET EUROPEEN

(21) Numéro de dépôt: **89420290.2**

(22) Date de dépôt: **01.08.89**

(51) Int. Cl.⁵: **F 16 H 1/44**

(30) Priorité: **05.08.88 FR 8810810**

(43) Date de publication de la demande:
**07.02.90 Bulletin 90/06**

(84) Etats contractants désignés:
**CH DE FR GB IT LI SE**

(71) Demandeur: **Poncet, Pierre**
**12bis Rue Trarieux**
**F-69003 Lyon (FR)**

(72) Inventeur: **Poncet, Pierre**
**12bis Rue Trarieux**
**F-69003 Lyon (FR)**

(74) Mandataire: **Monnier, Guy et al**
**Cabinet Monnier 150 Cours Lafayette B.P. 3058**
**F-69393 Lyon Cédex 03 (FR)**

(54) Différentiel à effet auto-bloquant pour transmissions de véhicules et applications analogues.

(57) Les engrenages différentiels (9, 11) sont montés dans un carter (7) qui tourne avec le boîtier (1) mais qui est libre de se déplacer axialement dans celui-ci, afin que lorsque l'un des deux empilages latéraux de disques (17) est pressé axialement pour solidariser le boîtier et les arbres de sortie (14) et faire ainsi cesser le patinage de l'une des roues, ledit carter transmette la pression à l'autre empilage (17). Le couple est ainsi transmis par les deux empilages (17).

EP 0 354 144 A1

**Description**

On sait que si la présence d'un différentiel est indispensable à la conduite d'un véhicule dans lequel l'entraînement s'effectue par deux roues disposées de part et d'autre de l'axe de celui-ci, son intervention devient indésirable lorsque l'adhérence de l'une des roues est inférieure au couple transmis (cas de circulation sur un terrain boueux, sablonneux, enneigé ou verglacé) puisque la roue à faible adhérence tourne folle alors que la roue opposée n'est plus entraînée.

Pour remédier à cet inconvénient, on a proposé des différentiels à effet auto-bloquant qui sont agencés de manière à faire automatiquement cesser l'entraînement différentiel dès que l'une des roues patine et à lier angulairement de manière rigide l'arbre moteur à l'un comme à l'autre des deux arbres de sortie du dispositif, et ce jusqu'à ce que l'adhérence redevienne normale au niveau des deux roues motrices.

Le système auto-bloquant le plus couramment proposé consiste à monter, de part et d'autre de l'axe des satellites du différentiel, deux empilages de disques de friction, chacun desdits empilages renfermant une première série de disques angulairement solidaires du boîtier lié à l'arbre moteur, et une seconde série de disques rendus angulairement solidaires de l'arbre de sortie correspondant à travers un coulisseau cannelé, axialement mobile sur celui-ci. Par ailleurs, on associe à chacun des planétaires du différentiel un mécanisme de rampe, les deux mécanismes étant reliés l'un à l'autre de façon à ce que le couple résistant qui apparaît au niveau du planétaire lié à la roue qui reste angulairement immobile en cas de patinage, provoque le déplacement du coulisseau correspondant et le pressage axial des deux séries de disques de l'empilage associé à l'arbre de la roue immobile De ce fait, cet arbre se trouve lié angulairement au boîtier et est en conséquence entraîné par suite de la disparition de l'effet différentiel, tandis que l'arbre opposé est lui-même entraîné à la même vitesse, sa roue tournant sans effort et sans patinage en favorisant de la sorte la reprise d'adhérence.

Des différentiels à effet auto-bloquant de ce type ont été notamment décrits dans les documents FR-A-1 596 579 (DAIMLER-BENZ AG), FR-A-1 540 993 (TOKYO SUKUHAN K.K.), et FR-A-2 604 504 (PONCET).

Il convient d'observer que dans les systèmes connus, l'agencement est tel que lorsqu'une roue du véhicule manque d'adhérence, seul intervient l'un des deux empilages latéraux de disques, en ce sens que les disques de l'empilage opposé ne sont pas appliqués les uns contre les autres et tournent donc librement. Il est clair qu'une telle construction aboutit à une mauvaise utilisation de l'ensemble des disques des deux empilages latéraux, puisque chacun de ceux-ci doit être dimensionné de façon à être apte à transmettre l'intégralité du couple. Le différentiel comprend dans ces conditions des pièces qu'on peut considérer comme superflues et qui accroissent sensiblement l'encombrement de l'ensemble du dispositif pour un couple maximal donné, alors que les problèmes d'encombrement sont particulièrement importants dans le cas des châssis de véhicules.

C'est à cet inconvénient qu'entend principalement remédier la présente invention, laquelle consiste essentiellement à monter les engrenages différentiels (satellites et planétaires) dans un carter qui est logé à l'intérieur du boîtier usuel d'entraînement de manière à être rendu angulairement solidaire de celui-ci tout en étant libre de se déplacer axialement par rapport à lui, afin que les faces transversales de ce carter mobile forment simultanément appuis pour les deux empilages latéraux de disques en transmettant ainsi le pressage de l'un à l'autre de ceux-ci qui dans tous les cas transmettent la totalité du couple.

Conformément à un mode de mise en oeuvre préféré de la disposition qui précède, entre les cannelures prévues à l'intérieur du boîtier d'entraînement pour le montage de l'une des deux séries de disques de chaque empilage latéral, sont interposées des cannelures ménagées sur la paroi extérieure du carter mobile de transmission.

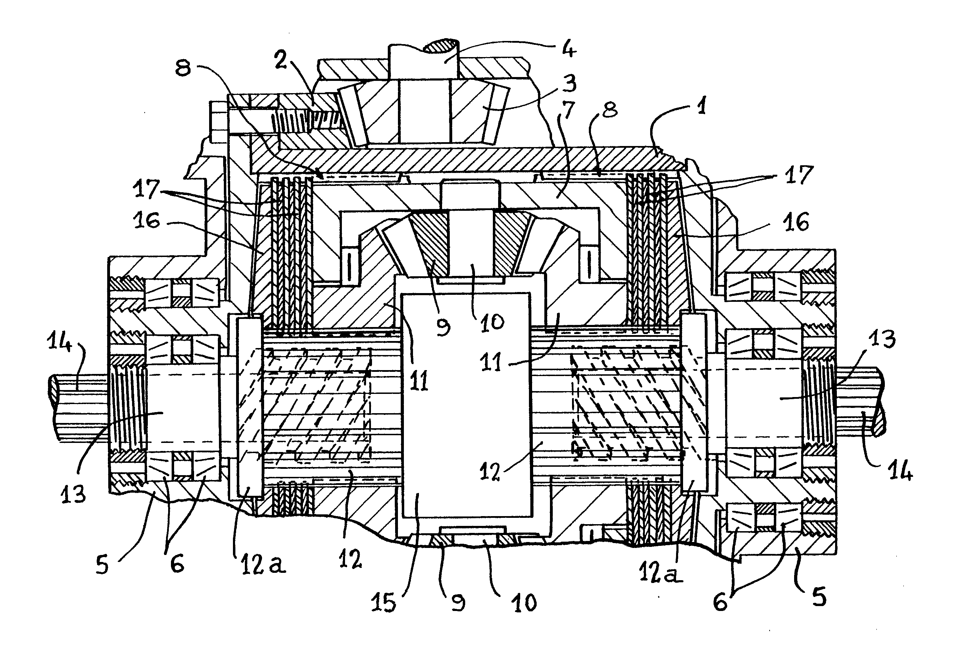

Le dessin annexé, donné à titre d'exemple, permettra de mieux comprendre l'invention, les caractéristiques qu'elle présente et les avantages qu'elle est susceptible de procurer :

La figure unique de ce dessin est une coupe axiale partielle d'un différentiel à effet auto-bloquant établi conformément à la présente invention

Sur cette figure, la référence 1 désigne un boîtier tournant d'entraînement qui est pourvu d'une denture 2 engrenant avec le pignon 3 usuelle ment fixé en bout de l'arbre moteur 4 destiné à l'entraînement des roues du véhicule. A la façon classique, ce boîtier 1 est monté dans les trompettes latérales 5 du châssis, avec interposition de roulements 6.

Conformément à l'invention, à l'intérieur du boîtier 1 est logé un carter 7 qui lui est rendu angulairement solidaire par l'intermédiaire de cannelures longitudinales 8 lui permettant de se déplacer axialement. L'espace intérieur de ce carter 7 est agencé à la manière usuelle en matière de différentiels à effet auto-bloquant, en ce sens qu'on trouve deux pignons satellites opposés 9 montés sur des axes radiaux 10 et engrenant avec deux planétaires 11. l'ouverture axiale de chaque planétaire 11 est cannelée afin d'assurer l'entraînement d'un coulisseau 12 dont les déplacements axiaux sont commandés par le planétaire correspondant 11 à travers un mécanisme de rampe.

Dans l'exemple de réalisation envisagé, on a supposé que les mécanismes de rampe envisagés étaient du type de ceux qui font l'objet de la demande de brevet français déposée au nom du présent Demandeur en date du 5 Août 1988. On rappelera que l'alésage axial de chaque coulisseau 12 est taraudé de manière à engrener avec l'extrémité filetée d'une bague 13, cannelée intérieurement afin d'opérer l'entraînement en rotation de l'arbre de sortie 14 qui la supporte. Les pas des filets réversibles prévus sur les deux coulisseaux 12 sont inversés et lesdits coulisseaux sont rendus axialement solidaires l'un de l'autre par des butées à billes au niveau de la partie centrale 15, tout en étant libres de tourner indépendamment l'un de l'autre.

L'extrémité de chaque coulisseau 12 qui est tournée vers l'extérieur comporte un épaulement annulaire 12a agencé de manière à prendre appui contre un plateau 16 à ouverture cannelée qui coulisse sur la périphérie du coulisseau correspondant. Entre chaque plateau 16 et la paroi transversale correspondante du carter mobile 7 est interposé un empilage de disques 17, chacun desdits empilages comprenant deux séries interposées de disques angulairement solidaires les uns du carter 7 et du boîtier 1 à travers les cannelures 8, les autres du coulisseau 12 correspondant à travers les cannelures extérieures de celui-ci.

Le fonctionnement du différentiel ci-dessus décrit découle des explications qui précèdent et se comprend aisément.

Lorsque les roues du véhicule considéré rencontrent la même adhérence, les efforts exercés sur les planétaires 11 sont équilibrés, si bien que les coulisseaux 12 restent immobiles et que les empilages latéraux de disques 16 ne subissent aucune presion axiale. Le mouvement est donc transmis aux deux arbres de sortie 14 avec l'effet différentiel dû à l'intervention des planétaires 11.

Par contre, quand un défaut d'adhérence se manifeste au niveau de l'une des roues en provoquant le patinage de la roue considérée et l'immobilisation angulaire de la roue opposée, le couple résistant qui s'exerce alors sur le planétaire 11 qui n'est pas entraîné provoque, par l'intermédiaire du système de vis (bague 13) et d'écrou (coulisseau 12), le déplacement axial des deux coulisseaux 12, si bien que l'un des deux plateaux 16 est pressé contre l'empilage 17 correspondant. Dans ces conditions, sous l'effet de la pression axiale qui s'exerce sur sa face latérale, le carter mobile 8 se déplace à son tour en opérant, par sa face transversale opposée, le pressage axial de l'autre empilage 17 dont le plateau 16 vient s'appliquer contre la paroi latérale du boîtier 1.

Dès lors, les deux arbres 14 sont directement entraînés par le boîtier 1, sans aucun effet différentiel, ce qui a pour résultat de faire cesser le patinage et d'opérer l'entraînement normal du véhicule.

Il convient d'observer que lorsqu'il y a amorce de patinage et qu'intervient donc l'arrêt de l'effet différentiel, la totalité du couple moteur est transmise par les deux empilages de disques 17, de telle sorte que ces empilages sont susceptibles d'être dimensionnés de manière plus réduite que dans le schéma classique où le couple total doit être transmis par l'un seulement des deux empilages. La construction est en conséquence simplifiée et le gain en encombrement est évident.

## Revendications

1. Différentiel à effet auto-bloquant pour transmissions de véhicules et applications analogues, du genre dans lequel le boîtier (1) qui est lié à l'arbre moteur (4) et qui entraîne les deux arbres de sortie (14) de manière différentielle par l'intermédiaire de satellites (9) et de deux planétaires (11), renferme, de part et d'autre de l'axe transversal de ces satellites, deux empilages de disques coulissants (17) dont une série est angulairement solidaire dudit boîtier tandis qu'une autre est portée par des coulisseaux (12) respectivement liés à l'un et à l'autre des deux arbres de sortie, lesquels coulisseaux sont réunis aux planétaires par des mécanismes de rampe qui sous l'effet du couple résistant qui apparaît au niveau de l'un des planétaires lorsque l'un des arbres de sortie reste angulairement immobile alors que l'autre continue à être entraîné, assurent le déplacement des coulisseaux et le pressage axial des disques contre le boîtier qui se trouve alors lié angulairement à l'arbre de sortie considéré, caractérisé en ce que les satellites (9) et les planétaires (11) sont portés par un carter (7) qui est logé à l'intérieur du boîtier (1) de manière à être rendu angulairement solidaire de celui-ci tout en étant libre de se déplacer axialement par rapport à lui, afin que les faces transversales de ce carter mobile forment simultanément appuis pour les deux empilages latéraux de disques (17) en transmettant ainsi le pressage de l'un à l'autre de ceux-ci qui dans tous les cas transmettent la totalité du couple.

2. Différentiel suivant la revendication 1, caractérisé en ce que la liaison angulaire entre le boîtier (1) et le carter mobile (7) est opérée à l'aide des cannelures longitudinales (8) sur lesquelles sont engagés les disques de l'une des deux séries qui forment chaque empilage latéral (17).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 587 346 (KOICHI TAKASHI)<br>* Revendication 1 *<br>--- | 1 | F 16 H 1/44 |
| A | US-A-2 923 174 (GLEASMAN)<br>* Colonne 2, lignes 58-72; figures 1,5 *<br>--- | 1 | |
| A | GB-A- 524 311 (F. PORSCHE)<br>* Page 3, lignes 42-48; figure 1 *<br>--- | 1 | |
| A | US-A-4 679 463 (OZAKI)<br>* Colonne 3, lignes 11-15; figure 1 *<br>----- | 1,2 | |

**DOMAINES TECHNIQUES RECHERCHES (Int. Cl.5)**

F 16 H

Le présent rapport a été établi pour toutes les revendications

| Lieu de la recherche | Date d'achèvement de la recherche | Examinateur |
|---|---|---|
| LA HAYE | 13-11-1989 | BEERNAERT J.E. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P0402)